# EUROPEAN PATENT APPLICATION

(11) **EP 4 755 586 A2**
(43) Date of publication of application: **10.06.2026**
(21) Application number: 25217081.6
(22) Date of filing: 19.11.2025
(51) Int. Cl.: B25F 5/00, B25F 5/02

(54) **TRANSMISSION HOUSING ASSEMBLY**

(30) Priority: 03.12.2024 US 202418967280
(71) Applicant: Techtronic Cordless GP, Anderson, SC 29621 (US)
(72) Inventor: HU, Tao, Dongguan City (CN); ZHANG, Qing Feng, Dongguan City (CN)
(74) Representative: Meissner Bolte Partnerschaft mbB

(57) **Abstract**

A transmission housing assembly for a power tool includes a front housing defining a first volume for receiving a first plurality of gears therein, a first rear housing portion, and a motor cover having an integral second rear housing portion engageable with the front housing and the first rear housing portion to enclose a second volume for receiving a second plurality of gears therein.

## Description

### FIELD OF THE DISCLOSURE

The present disclosure relates to a transmission housing assembly for a power tool and a method of assembling the same.

### BACKGROUND OF THE DISCLOSURE

Many power tools transfer the rotary motion from a motor coupled to an electrical power source (e.g. power source/battery) under the control of an operator to an output member. Some power tools such as a cordless drill, impact driver or saw transfer rotary motion of the motor to the output member via a gearbox transmission. Typically, a user configurable multistage/multi-speed gearbox transmission is used to provide custom speed and custom torque settings (amount of force which causes rotation).

Most gearbox transmissions include a clutch which disengages the motor once the selected torque setting during operation, thereby controlling the amount of driving force supplied to the output member. User configurable options for setting torque and speed therefore make the tool more versatile as they enable an operator to select the desired speed/torque setting based on multiple factors such as material type, thickness, hardness of individual layer(s) and nature of the job being performed.

For example, a user driving a small screw with a cordless drill into a soft wood member may choose a low torque setting/low speed to avoid overdriving the screw or stripping the screw head. Conversely if the same screw is being driven into a hard piece of wood more torque is required or else the screw won't be driven. Finally, if using the same cordless drill to drive a screw into hard wood a higher speed setting will get the task performed quicker.

To provide the user configurable modes of operation outlined above the gearbox transmission typically comprises three or more layers of planetary/ring/sun gears which are manually assembled in a relatively compact arrangement inside front and rear housings. Typically, a lock ring is engaged with the housing and axially displaceable to and from engagement with the second layer ring gear for changing speed via an externally actuable lever. The front and rear housings are secured together with combination screws and attached to the motor cover before being inserted into shell.

Unfortunately, assembly of the above components in a small housing can be difficult and time consuming. In particular, the insertion of the speed lever change into engagement with the second layer ring gear is especially problematic, and issues with this assembly may be difficult to detect. Furthermore, the inclusion of this speed lever requires inclusion of separate seal and together with the additional screws and the like increase the assembly time required.

### SUMMARY OF THE DISCLOSURE

The present disclosure provides, in a particular aspect, a transmission housing assembly for a power tool including a front housing defining a first volume for receiving a first plurality of gears therein, a first rear housing portion, and a motor cover having an integral second rear housing portion engageable with the front housing and the first rear housing portion to enclose a second volume for receiving a second plurality of gears therein.

The present disclosure provides, in another aspect, a method of assembling a transmission assembly, the method includes inserting a plurality of third layer gears in a front housing, engaging a first rear housing portion with the front housing, inserting a plurality of second layer gears into the first rear housing portion of the engaged first rear housing portion and front housing, and locating each end of a speed selection lever in a groove defined in a second layer ring gear and on bosses extending from the first rear housing portion. The method further includes inserting a plurality of first layer gears into the engaged first rear housing portion and front housing and engaging a motor cover having an integral second rear housing portion with the first rear housing portion and the front housing.

The present disclosure provides, in yet another aspect, a power tool including an electric motor, and a transmission assembly coupled to the electric motor to receive torque therefrom that includes a front housing defining a first volume for receiving a first plurality of gears therein, a first rear housing portion, a speed selection lever pivotably coupled to the first rear housing portion, and a motor cover for housing the electric motor. The motor cover includes an integral second rear housing portion opposite the motor that is engageable with the front housing and the first rear housing portion to enclose a second volume for receiving a second plurality of gears therein. The motor cover also includes a plurality of seal tabs extending over the speed selection lever to seal the speed selection lever between the first rear housing portion and the second rear housing portion.

Other features and aspects of the disclosure will become apparent by consideration of the following detailed description and accompanying drawings.

### BRIEF DESCRIPTION OF THE DRAWINGS

FIG. 1A is an exemplary perspective view of a prior art transmission assembly for use in a power tool.
FIG. 1B is an exploded perspective view of the prior art transmission assembly of FIG. 1A.
FIG. 1C is a further exploded perspective view of the prior art transmission assembly of FIG. 1A.
FIG. 2A is a perspective view of a power tool having a transmission assembly in accordance with an embodiment of the present disclosure.
FIG. 2B is a side view of the power tool of FIG. 2A, with portions removed to illustrate the transmission assembly.
FIG. 2C is a side view of a second power tool having a transmission assembly in accordance with an embodiment of the present disclosure.
FIG. 2D is a perspective view of the transmission assembly of the power tool shown in FIG. 2C.
FIG. 3A is a perspective view of a transmission assembly in accordance with an embodiment of the invention for use with any of the power tools of FIGS. 2A-2C.
FIG. 3B is an exploded perspective view of the transmission assembly of FIG. 3A.
FIG. 3C is a further exploded perspective view of the transmission assembly of FIG. 3A.
FIG. 4A is a perspective view of a complementary rear housing of the transmission assembly which is configured for engagement with a motor cover shown in FIG. 4B a front housing shown in FIG. 4C.
FIG. 4B is a perspective view an embodiment of the motor cover with the motor removed for ease of reference.
FIG. 4C is a perspective view of an embodiment of the front housing of the transmission assembly according to an embodiment of the present disclosure.
FIG. 5A is an exploded perspective view of a transmission housing assembly of the transmission assembly of FIG. 3A, in which the motor cover is spaced apart from the front housing and respective portions of a split rear housing are unitized with the motor cover and front housing, respectively.
FIG. 5B is a front perspective view of the split rear housing including a locking ring engaged therein.
FIG. 6A is a rear perspective view of the front housing and unitized first rear housing portion of FIG. 5A, including components of the transmission in a partially assembled state.
FIG. 6B is a front perspective view of the front housing and unitized first rear housing portion of FIG. 6A, with included transmission components, aligned for engagement with the unitized second rear housing portion and motor cover.
FIG. 7A is an exploded perspective view of an embodiment of the transmission housing assembly of the present disclosure shown in an orientation for inclusion in the power tool of FIG. 2B.
FIG. 7B is an exploded perspective view of an embodiment of the transmission housing assembly of the present disclosure for inclusion in the power tool of FIG. 2C.

Before any embodiments of the present disclosure are explained in detail, it is to be understood that the embodiments described herein are not limited in scope or application to the details of construction and the arrangement of components set forth in the following description or as illustrated in the following drawings. The devices described herein are capable of other embodiments and of being practiced or of being carried out in various ways. Also, it is to be understood that the phraseology and terminology used herein is for the purpose of description and should not be regarded as limiting.

### DETAILED DESCRIPTION

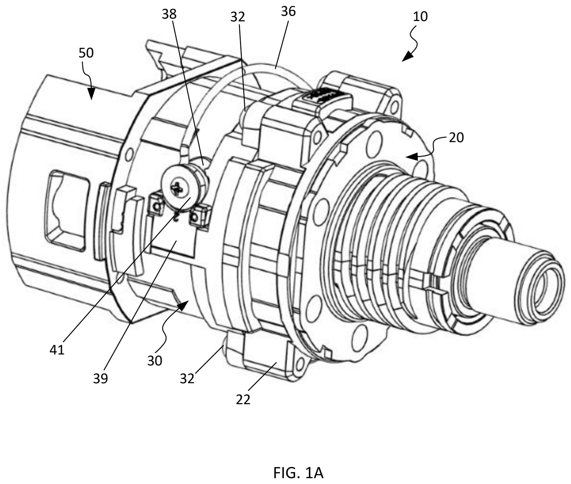

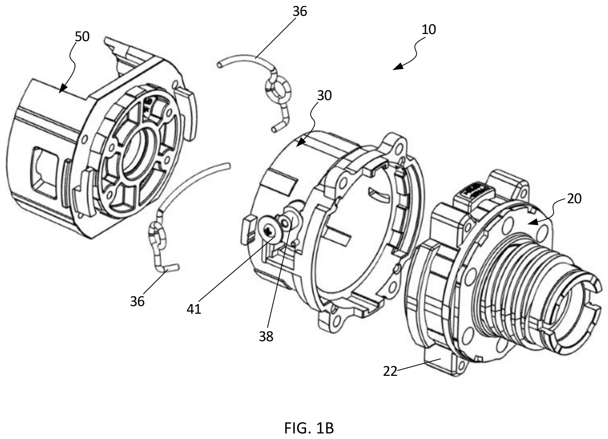

FIG. 1A is a perspective view of a prior art transmission assembly 10. FIG. 1B is an exploded perspective view of the transmission assembly 10 of FIG. 1A.

As shown in FIGS. 1A and 1B, a front housing 20 is secured to a rear housing 30 by screws 32 which engage with corresponding bosses 22 on the front housing 20. The rear housing 30 is in turn engaged with a motor cover 50, in which an electric motor is retained (not shown). Positioning screws 41 attach a speed selection lever 36 on protruding bosses 38 that extend from the external surface of the rear housing 30.

With continued reference to FIG. 1A, a seal cover 39 is formed using a separate plate which is subsequently attached to the rear housing 30, with this seal cover 39 configured to retain the grease in the transmission assembly 10 for operation. The seal cover 39 has been removed from FIG. 1B for ease of reference.

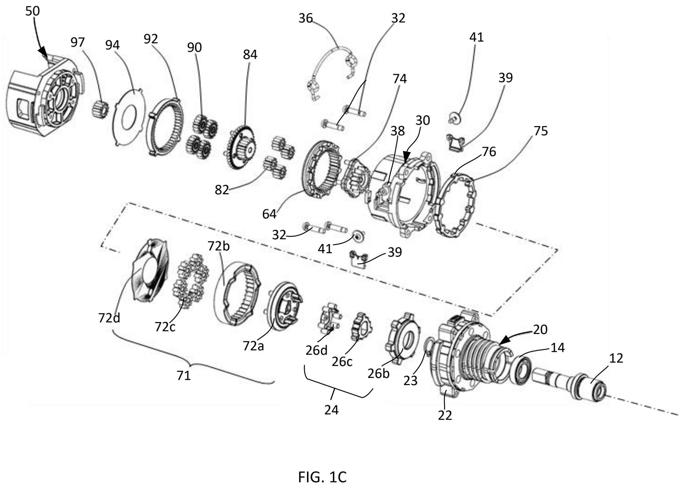

FIG. 1C is an exploded perspective view of the transmission assembly 10 of FIG. 1A. As depicted, the front housing 20 provides space and support for the various gears contained therein. Importantly, the third layer ring gear 72b is supported in the front housing 20 to provide a clutch function for the transmission, enabling the transmission assembly 10 to engage/disengage from the driven gear of the output shaft. Similarly, the rear housing 30 has a role of providing space, support, and fixation of the gears which are contained therein, and retention of the speed selection lever 36 thereon. In this arrangement, it would be appreciated that the motor cover 50 is engaged only with the rear housing 30 and retains the motor therein.

With continued reference to FIG. 1C, the front part of the front housing 20 receives an output shaft 12 supported in a bearing 14. Preferably the bearing 14 is a roller bearing although other bearings or bushings may also be used. The output shaft 12 is configured so that it may be subsequently attached to the chuck (not shown) in which the operating member of a tool may be received. The output shaft 12 is configured to be held in place by a retaining ring 23.

With continued reference to FIG. 1C, a spindle lock assembly 24 is received in the rear portion of the front housing 20 and includes a manual spindle lock plate (outer bracket) 26b, a cam plate 26c, as well as spindle lock pins 26d. As is typical with other transmission assemblies in the art, the transmission assembly 10 further includes a third layer gear assembly 71 including a carrier 72a, a third layer ring gear 72b, a third layer planetary gears 72c, and a third layer washer 72d for retaining components within the volume defined in the front housing 20 in a manner customary to similar assemblies in the art. The transmission assembly 10 further includes a lock ring 75 retained by the engagement of projections 76 within complementary recesses defined in the front housing 20.

With reference to FIGS. 1A-1C, it would be appreciated that the components of the transmission assembly 10 may be assembled into the front housing 20 by inserting the components into the front of the front housing 20 when it is arranged in a generally vertical orientation. The components may then be placed inside the front housing 20, retained by the first layer washer 72d. Next, the rear housing portion 30 may be engaged with the front housing 20 as described further herein with reference to FIGS. 1A and 1B. The lock ring 75 and the third layer sun gear 74 are retained in the volume defined by the rear housing 30. Also retained in the volume defined by the rear housing portion 30 and motor cover 50 are the second layer ring gear 64, which houses second layer planetary gears 82 and the second layer sun gear 84. The second layer ring gear 64 may be urged into and out of engagement with the lock ring 75 by actuation of the speed selection lever 36, thereby enabling high or low speed selection by the operator. The first layer planetary gears 90 are received in first layer ring gear 92 and retained in the volume defined by the rear housing portion 30 by first layer washer 94. Motor pinion gear 97 is also shown for reference, being attached to a projecting shaft of the motor (not shown).

The assembly of the prior art transmission assembly 10 typically performed by packing the gears and other components vertically within the front housing 20. First, the bearing 14 is inserted over the shaft 12 and inserted in the front part of the front housing 20 before being secured by the retaining ring 23. Next, the manual spindle lock plate 26b, the cam plate 26c, as well as the spindle lock pins 26d and the carrier 72a, are inserted into the front housing 20. Then, the third layer ring gear 72b and the third layer planetary gears 72c are inserted within the volume defined in the front housing 20. The rear housing 30 is then obtained and a third layer washer 72d for retaining components inserted as well as the lock ring 75 into the front part of the rear housing 30. It is noted that the third layer washer 72d also retains components inside the front housing 20. The third layer sun gear 74 is received in the rear part of the rear housing 30

Next, the front housing 20 (including various gears packed inside) and rear housing 30 are then secured together by engaging the screws 32 with the bosses 22 of the front housing 20. The speed selection lever 36 is then fitted onto the bosses 38, such that the ends of the speed selection lever 36 are retained in a groove defined around the periphery of the second layer ring gear 64. It would be appreciated that this step can be difficult to perform, as the second layer ring gear 64 is not visible and is largely performed by the assembler detecting by touch the sliding into place of the ends of the speed selection lever 36 in a groove defined in the second ring gear 64. Unfortunately, at this stage, it is difficult for quality assurance personnel to verify that the speed selection lever 36 has been correctly inserted into engagement with the second layer ring gear 64. The speed selection lever 36 is then secured on the bosses 38 using the securing screws 41 and retained by these screws 41 and the seal cover plates 39. The second layer sun gear 84 and four second layer planetary gears 82 are then packed into the rear housing 30. Next, the first layer planetary gears 90 and the first layer ring gear 92 are packed within the rear housing 30 before it is sealed with the first layer washer 94. The motor and motor cover 50 and pinion gear 97 are then engaged together and then attached to the combined front housing 20 and rear housing 30, typically by sliding and interlocking corresponding formations on the front faces of the motor cover 50 and rear housing 30.

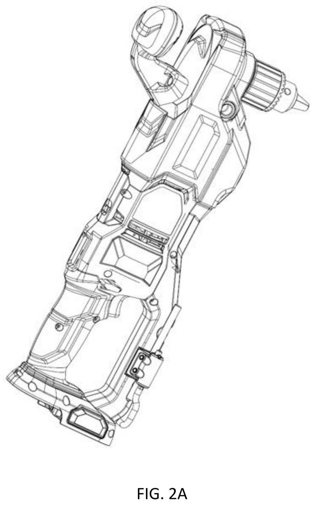

FIG. 2A is a perspective view of a stud and joist drill in which either the prior art transmission assembly 10 from FIGS. 1A-1C may be used or the transmission assembly of the present disclosure may be used. In the exemplary tool shown, the power tool is a stud and joist drill. However, it should be appreciated that the transmission assembly of the present disclosure could also be received in a conventional cordless drill arrangement without limitation.

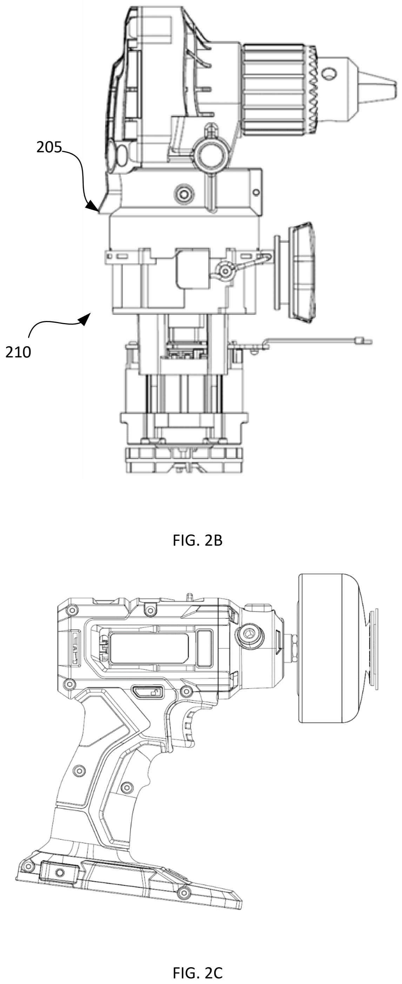

FIG. 2B is a side view of a gear box portion 205 of the stud and joist drill shown in FIG. 2A, including a transmission assembly 210. It is noted that the transmission assembly 210 has essentially the same components as those described herein with reference to transmission assembly 110.

FIG. 2C is a side view of a second power tool which can use either the prior art transmission assembly 10 or the transmission assembly of the present disclosure.

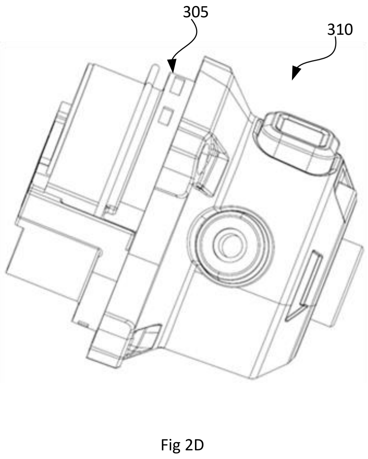

FIG. 2D is a perspective view of the gearbox 305 of the power tool of FIG. 2C. including a transmission assembly 310. It is noted that the transmission assembly 310 has essentially the same components as those described herein with reference to transmission assembly 110.

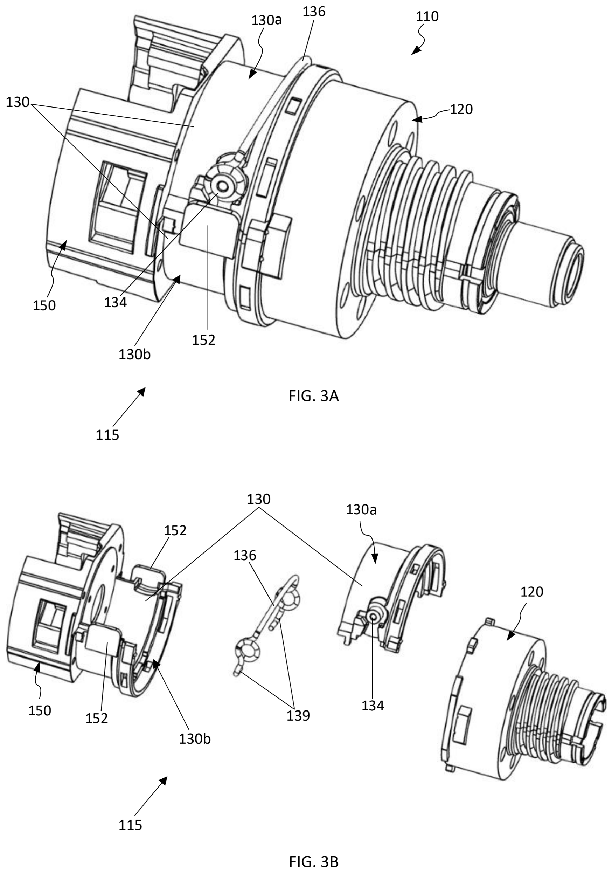

With reference to FIGS. 3A-3C, there are shown exemplary representations of an embodiment of a transmission assembly 110, which includes a transmission housing assembly 115 (described below) and transmission components therein. The transmission housing assembly 115 includes a front housing 120 that retains the gears and provides support and fixation, just as in the case of the front housing 20 of the prior art transmission assembly 10. However, in contrast to the prior art, the transmission housing assembly 115 includes a split rear housing 130 between the front housing 120 and a motor cover 150. In the illustrated embodiment, the split rear housing 130 includes a first rear housing portion 130a that is separate from but unitized with the front housing 120, and a second rear housing portion 130b that is unitized with the motor cover 150.

FIG. 3A is a perspective view of the transmission assembly 110 of the present disclosure in an assembled state, which appears similar to the transmission assembly 10 depicted in FIG. 1A. However, the difference is more apparent with reference to FIG. 3B, which illustrates an exploded perspective view of the transmission assembly 110 of FIG. 3A. As shown, the front housing 120 is attached to a rear housing portion 130a and the motor cover 150, and the rear housing portion 130a is engaged with a corresponding rear housing portion 130b extending from the motor cover 150 to define a volume therein. Together, the front housing 120, the rear housing portions 130a, 130b, and the motor cover 150 are the components of the transmission housing assembly 115. In the illustrated embodiment, the rear housing portion 130b and the motor cover 150 are integrally formed as a single piece. In the illustrated embodiment, the rear housing portion 130a does not independently define a volume for receiving transmission components (e.g., gears), but must be engaged with the rear housing portion 130b of the motor cover 150 to define the volume for receiving the transmission components described below. In the prior art arrangement, the rear housing 30 defines a volume in which gears and other components may be received, independent of the motor cover 50. Thus, the volume is defined by the rear housing 30 without inclusion of the motor cover 50.

Turning to FIGS. 3A-3C, the speed selection lever 136 is secured on a plurality of bosses 134 extending from opposite sides of the rear housing portion 130a and between the rear housing portion 130a and the motor cover 150 to be captured therebetween upon engagement thereof. The rear housing portion 130b further includes a plurality of sealing tabs 152 projecting from the motor cover 150 and configured to seal and capture the speed selection lever 136 between the rear housing portion 130a and the rear housing portion 130b and the motor cover 150 upon engagement thereof. In some embodiments, the plurality of sealing tabs 152 can be integrally molded with the motor cover 150 and the rear housing portion 130b from plastic or aluminum/magnesium alloy. In some embodiments, the molding could be injection molding or diecasting or other appropriate approaches in the art. In other embodiments, the rear housing portion 130b could be secured to a conventional motor cover after manufacture.

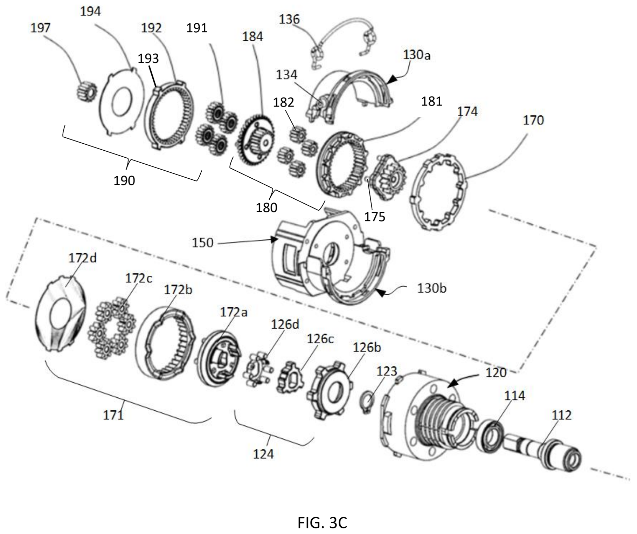

FIG. 3C illustrates an exploded perspective view of the transmission assembly 110 of FIG. 3A. To fully assemble the components of the transmission assembly 110, a user must first orient the front housing 120 in a generally vertical orientation. Next, the user inserts an output shaft 112, supported by a bearing 114, into the front part of the front housing 120 to be retained therein using a retaining ring 123. In some embodiments, the bearing 114 is a roller bearing although other bearings or bushings may also be used. The output shaft 112 is configured so that it may be subsequently coupled to a chuck (not shown) in which the operating member of a tool may be received. Next, a spindle lock assembly 124 is inserted into in the rear portion of the front housing 120. The spindle lock assembly 124 includes an optional spacer (not shown), a manual spindle lock plate 126b, a cam plate 126c, and a plurality of spindle lock pins 126d.

After the user inserts the spindle lock assembly 124, a user then inserts a third layer gear assembly 171 into the front housing 120. The third layer gear assembly 171 includes a 172a carrier, a third layer ring gear 172b, a plurality of third layer planetary gears 172c, a third layer sun gear 174 having a plurality of pins 175 extending rearward from gear 174, and a third layer washer 172d for retaining both the components of the third layer gear assembly 171 and the components of the spindle lock assembly 124 within a volume defined in the front housing 120 while the front housing 120 is in the generally vertical orientation. Next, the user places a lock ring 170 on top of the third layer washer 172d that is partially retained within both the front hosing 120 and rear housing portions 130a, 130b in a manner explained in detail below.

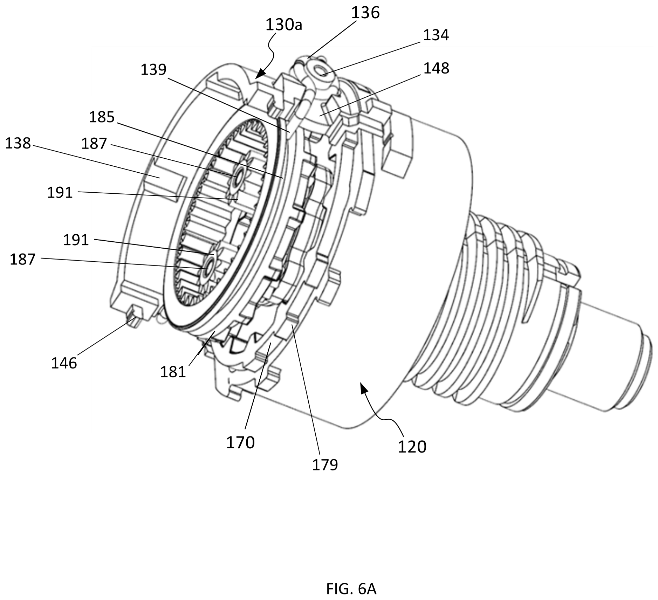

Next, the rear housing portion 130a is coupled with the front housing 120 (and subsequently with the rear housing portion 130b and the motor cover 150) as described in further detail below. It should be noted that the engagement of the rear housing portion 130a with the front housing portion 120 and the rear housing portion 130b and the motor cover 150 differs from the structures and method of assembly of the prior art transmission assembly 10 and housing 20 as described further herein. After the rear housing portion 130a is coupled with the front housing 120, the user then inserts a second layer gear assembly 180 within the volume defined between the rear housing portion 130a and rear housing portion 130b when the rear housing portion 130b is coupled to the rear housing portion 130a as described below. The second layer gear assembly 180 includes a second layer ring gear 181, a plurality of second layer planetary gears 182 configured to be received on respective pins 175, and a second layer sun gear 184 having a plurality of pins 187 (FIG. 6A) extending rearward from the gear 184. The second layer ring gear 181 includes a circumferential groove 185 (FIG. 6A) and is retained on the rear housing portion 130a by the speed selection lever 136 that is received within the circumferential groove 185 as described in more detail below.

At this point in the assembly 110, the engagement of the speed selection lever 136 (FIG. 6A) within the circumferential groove 185 of the second layer ring gear 181 is particular advantageous for the user assembling the assembly 110, as the user assembling the transmission assembly 110 can visually confirm the second layer gear assembly 180 is mated properly within the volume defined by the rear housing portion 130a and rear housing portion 130b before the rear housing portion 130a and the rear housing portion 130b of the motor cover 150 are coupled together. It would be appreciated that this step in assembling the transmission assembly 110 of the present disclosure is very different from that of the prior art, and the assembly 110 at this stage can be further visualized by reference to FIG. 6A.

In some embodiments of the assembly 110, it is advantageous to insert the gear assemblies 171, 180 while the front housing 120 and rear housing portion 130a are oriented in an orientation other than a generally vertical orientation. This is in contrast to the prior art transmission assembly 10 where both the front housing 20 and the rear housing portion 30 are generally vertically oriented (resting on a surface) and the gears are placed vertically inside the housings 20, 30.

With continued reference to FIG. 3C, the user next inserts a first layer gear assembly 190 into the volume defined by the rear housing portion 130a and the rear housing portion 130b of the motor cover 150. The first layer gear assembly 190 includes a motor pinion gear 197 configured to receive rotational torque from the motor (not shown), a plurality of first layer planetary gears 190 that are inserted inside the second layer ring gear 181 and received on respective pins 187, a first layer ring gear 192, and a first layer washer 194 for retaining the components of the first layer gear assembly 190. To complete the assembly 110, the user now couples the rear housing portion 130a to the rear housing portion 130b and the motor cover 150 to enclose the gear assemblies 171, 180 within the volume defined by the rear housing portions 130a, 130b.

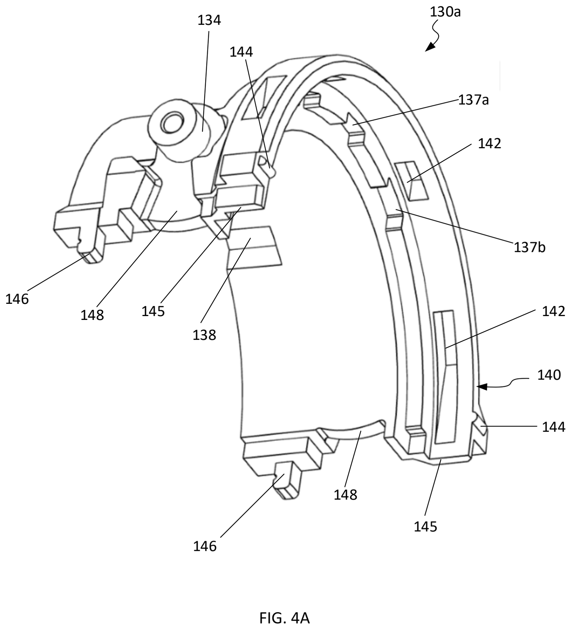

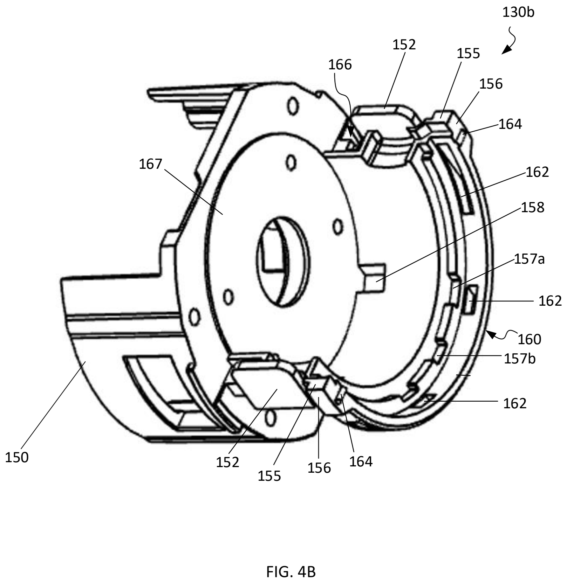

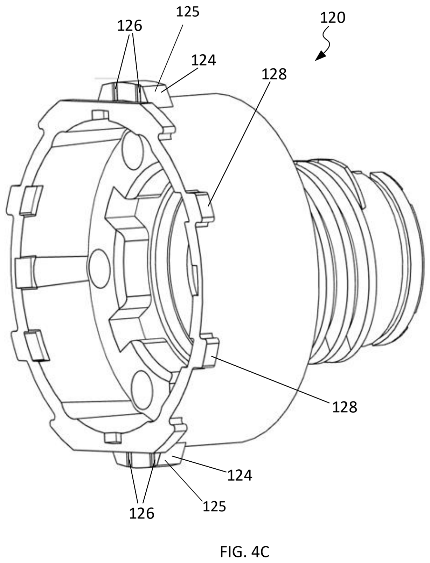

FIG. 4A illustrates a perspective view of the rear housing portion 130a of the transmission housing assembly 115 that is configured for engagement with the motor cover 150 and rear housing portion 130b illustrated in FIG. 4B, and the front housing 120 illustrated in FIG. 4C as described above. The rear housing portion 130a includes a plurality of recesses 137a, 137b for engagement with a plurality of protrusions 179 radially disposed on the lock ring 170 (FIG. 3A) for retention of the lock ring 170 within the volume defined by the rear housing portions 130a, 130b and the motor cover 150. The lock ring 170 is also partially retained by the rear housing portion 130b as described in more detail below. The rear housing portion 130a further includes a groove 138 that is sized and shaped for engagement with a plurality of protrusions 193 radially disposed on the first layer ring gear 192. In some embodiments, the groove 138 may be dimensioned so that it is non-cubic, and optionally trapezoidal in cross section as depicted. In other embodiments, the cross section of the groove 138 is configured for tight fit with the plurality of protrusions 193 on the first-layer ring gear 192. In other embodiments, the cross section of the groove 138 only allows for the insertion of the first layer ring gear 192 into the groove 138 to be made in one direction.

With continued reference to FIGS. 4A and 4C, the rear housing portion 130a further includes a top peripheral ridge 140 having a plurality of apertures 142 for receiving a plurality of tabs 128 (FIG. 4C) extending from the front housing 120 to secure the front housing 120 and the rear housing portion 130a against axial displacement. In some embodiments, similar complementary structures (apertures/tabs) on the motor cover 150 and front housing 120 could also be used without departure from the scope of the present disclosure. In other embodiments, the apertures 142 could include sloped portions for better engagement with complementary sloped portions of the tabs 128 extending from the front housing 120. The top peripheral ridge 140 further includes a plurality of securing formations 144 which locate in corresponding grooves 126 defined in a plurality of lugs 124 (FIG. 4C) radially disposed about the front housing 120 to prevent radial movement therebetween. The rear housing portion 130a further includes one or more securing tabs 146 which engage with one or more complementary securing recesses 166 (FIG. 4B) defined in the motor cover 150, and a plurality of seal grooves 148 adjacent respective bosses 134 for receiving the seal tabs 152. Together, the one or more securing tabs 146 and the plurality of grooves 148 retain the speed selection lever 136 and resist radial movement when the speed selection lever 136 is coupled to the rear housing portion 130a via the plurality of bosses 134.

In some embodiments, the engagement of the one or more securing tabs 146 in respective recesses 166 of the rear housing portion 130a resists relative radial movement therewith. In other embodiments, this engagement may be facilitated by corresponding grooves/protrusions in the arrangement as illustrated, or in a converse arrangement. In other embodiments, the converse arrangement of one or more securing tabs 146 with respective recesses 166 would also be possible without departing from the present disclosure.

FIG. 4B illustrates a perspective view of an embodiment of the motor cover 150 and the rear housing portion 130b in the transmission assembly 110 illustrated in FIGS. 3A-3C. The rear housing portion 130b includes a peripheral rim 160 at a distal end thereof having a plurality of inclined faces 156 configured to be compressed by a plurality of corresponding inclined faces 125 located on respective lugs 126 of the front housing 120 to urge the rear housing portion 130b and the motor cover 150 into engagement with the front housing 120. In some embodiments, the plurality of inclined faces 156 may be configured as truncated cones, although similar formations could also be provided.

With reference to FIGS. 4A and 4B, the peripheral rim 160 of the rear housing portion 130b further includes a plurality of end faces 155 configured to couple with a plurality of corresponding end faces 145 located on the top peripheral ridge 140 of the rear housing portion 130a. In some embodiments, the plurality of end faces 155 include a stepped profile as illustrated in FIG. 4B and can be sized and positioned for nesting contact/engagement with the complementary plurality of stepped surfaces 145 in FIG. 4A of the rear housing portion 130a to achieve stable engagement of the rear housing portions 130a, 130b, and to prevent leakage of grease therebetween. It would be appreciated that the converse arrangement would also be possible without departing from the present disclosure. In some embodiments, the area of the mating end faces 145, 155 described above are preferably greater than zero and preferably not less than half of the area of either end of the peripheral rim 160 of the rear housing portion 130b and the top peripheral ridge 140 of the rear housing portion 130a respectively.

In other embodiments, one or more of any of the plurality of end faces 145, 155 may include a projecting lip for enhanced grease retention. Advantageously, accidental radial disengagement of the motor cover 150 from the rear housing portion 130 is also inhibited by this arrangement of complementary stepped end faces (which may also be considered as a wave shape profile).

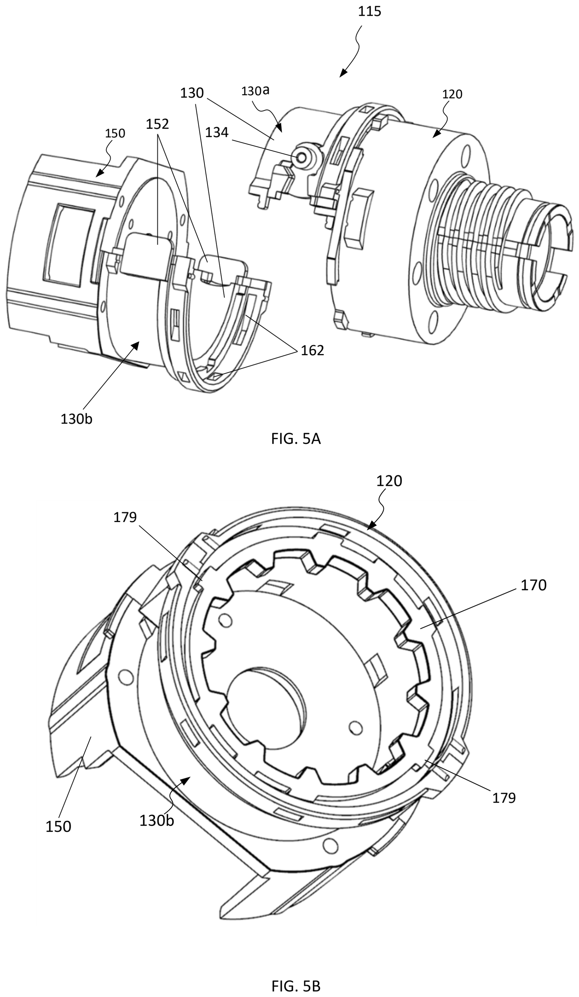

With continued reference to FIGS. 4A and 4B, the rear housing portion 130b further includes a plurality of recesses 157a, 157b for engagement with the plurality of corresponding protrusions 179 (FIG. 5B) on the lock ring 170 for retention of the lock ring 170 within the volume defined by the rear housing portion 130b when engaged with the rear housing portion 130a. Similar to the groove 138 formed in the rear housing portion 130a, the rear housing portion 130b further includes a groove 158 defined in the base of the rear housing portion 130b which is sized and shaped for the engagement with the corresponding protrusions 193 (FIG. 3C) on the first layer ring gear 192. In some embodiments, the groove 158 may be dimensioned so that it is non-cubic, and optionally trapezoidal in cross section. In other embodiments, the cross section of the groove 158 is shaped to form a tight engagement between the protrusions 193 of first layer ring gear 192 and the rear housing portion 130b. In other embodiments, the first layer ring gear 192 may be inserted in into the front housing 120 in only one orientation. In some embodiments, the peripheral rim 160 includes one or more apertures 162 for receiving the plurality of corresponding securing tabs 128 (FIG. 4C) extending from the front housing 120 to secure the rear housing portion 130b and motor cover 150 with the front housing 120 against axial displacement. In other embodiments, similar complementary structures could also be used without departure from the scope of the present disclosure.

With yet continued reference to FIGS. 4A and 4B, the peripheral rim 160 of the rear housing portion 130b further includes a plurality of securing formations 164 formed adjacent the end faces 155 that are configured to locate in the plurality of corresponding recesses 126 (FIG. 4C) defined in the lugs 124 of the front housing 120 to prevent radial displacement of the front housing 120 and rear housing portion 130b. In some embodiments, the peripheral rim 160 can include a protruding surface 167 to assist locating the top peripheral ridge 140 of the rear housing portion 130a into engagement with the rear housing portion 130b. In other embodiments, this arrangement facilitates the retainment of grease.

FIG. 5A illustrates an exemplary perspective view of an embodiment of the front housing 120 of the transmission housing assembly 115 configured for engagement with the rear housing portions 130a, 130b and the motor cover 150. To facilitate engagement between the front housing 120 and the rear housing portions 130a, 130b as illustrated in FIG. 5A, the plurality of grooves 126 (FIG. 4C) on respective lugs 124 of the front housing 120 nest with the plurality of securing formations 144 of the rear housing portion 130a (FIG. 4A) and the plurality of securing formations 164 of the rear housing portion 130b (FIG. 4B). Next, the plurality of securing tabs 128 (FIG. 4C) extending from the front housing 120 are received in the corresponding apertures 142 of the rear housing portion 130a (FIG. 4A), and the corresponding apertures 162 of the rear housing portion 130b (FIG. 4B) are positioned to receive the plurality of securing tabs 128 extending from the front housing 120 to complete the engagement between the front housing 120 and rear housing portions 130a, 130b and motor cover 150 about to occur in FIG. 5A.

FIG. 5B illustrates a top perspective view of the front housing 120 and rear housing portion 130b and motor cover 150 including the lock ring 170 retained therein. The lock ring 170 is retained within the rear housing portion 130b by the plurality of radially extending protrusions 179 that extend from the lock ring 170 into the corresponding recesses 137a, 137b (FIG. 4A), and 157a, 157b (FIG. 4B) located on the rear housing portions 130a, 130b, respectively. It would be appreciated that as the speed selection lever 136 (FIG. 6A) moves the second ring gear 180 into and out from engagement with the fixed lock ring 170 to change speeds.

FIG. 6A illustrates a side perspective view of the transmission housing assembly 115 of the present disclosure together with included components of the transmission assembly 110 in a partially assembled state. The insertion of components up to this stage involved the user inserting the components into the housing portions 130a, 130b and front housing 120 similar to the assembly process of the gears and other components in the prior art transmissions. However, as illustrated, the speed selection lever 136 is mounted on the plurality of bosses 134 of the rear housing portion 130a such that respective ends 139 of the speed selection lever 136 are retained in the circumferential groove 185 of the second ring gear 181 so that the user can visibly see that the speed selection lever 136 is properly mounted within the groove 185 in contrast to the prior art arrangement. By having the speed selection lever 136 visible to the user in this manner at this stage in assembling the transmission assembly 110, the user can more readily verify that the speed selection lever 136 is properly mounted to the second layer ring gear 181 in contrast to the prior art.

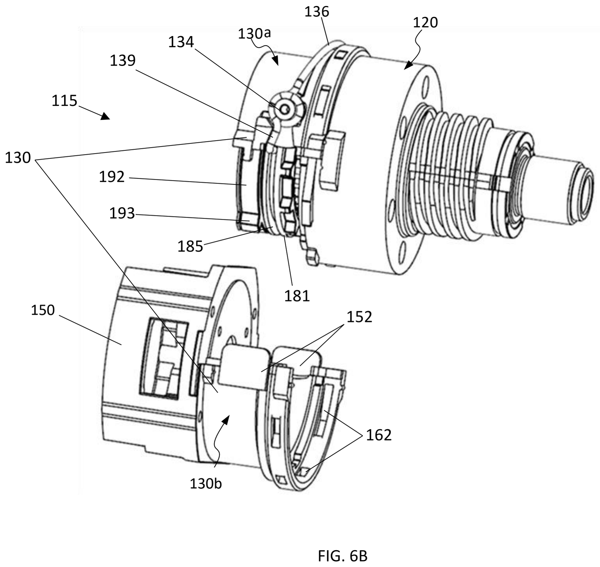

FIG. 6B illustrates a side perspective view of the transmission assembly 110 of the present disclosure. In this position, the transmission assembly 110 is aligned for engagement with the rear housing portions 130a, 130b, motor cover 150, and front housing 120 as described above. It would be appreciated that the inter-engagement of these components of the transmission housing assembly 115 are as discussed with reference to FIGS. 4A-4C above.

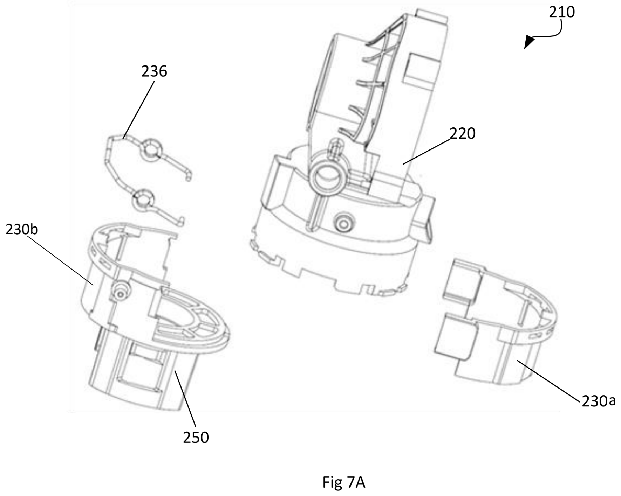

FIG. 7A is an exploded perspective view of an embodiment of the transmission housing assembly 115 of the present disclosure shown in an orientation for inclusion in the power tool of FIG. 2B. The transmission assembly 210 includes a front housing 220, which is able to be attached to a rear housing portion 230a, and a rear housing portion 230b and a motor cover 250 to define a volume therein. In this arrangement, the rear housing portion 230a does not independently define the volume for receiving other components but must be engaged with the rear housing portion 230b and the motor cover 250, which can be seen in FIG. 2B. The speed selection lever 236 is received between the rear housing portion 230a and the rear housing portion 230b and the motor cover 250 to be captured therebetween upon engagement as described herein. In some embodiments, the power tool can be a right-angle drill.

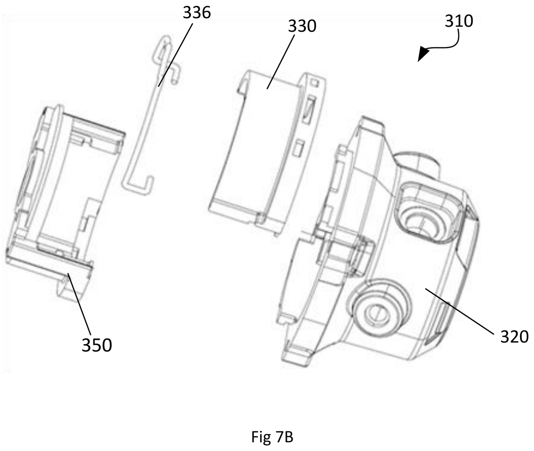

FIG. 7B illustrates an exploded perspective view of the major components of an embodiment of the transmission housing assembly 115 of the present disclosure for inclusion in the power tool of FIG. 2C. The transmission assembly 310 includes a front housing 320, which is able to be attached to a rear housing portion 330, and a motor cover 350. In this arrangement, the rear housing portion 330 does not independently define a volume for receiving other components but must be engaged with the motor cover 350 to define the volume, which can be seen in FIG. 2D. Similarly, the speed selection lever 336 is received between the rear housing portion 330 and the motor cover 350 to be captured therebetween upon engagement as described herein.

Advantageously, the transmission assembly 110 arrangement described herein provides a more easily assembled assembly than transmission assemblies of the prior art. In one aspect, the transmission assembly 110 of the present disclosure provides enhanced visibility of the assembly of the speed change lever 136 when engaged with the second ring gear 181, making this engagement easier to perform for an assembler and also to verify by another party. As described, the engagement of the speed change lever 136 can be observed and verified before the motor cover 150 and rear housing portion 130b is attached to the rear housing portion 130a and the front housing 120.

Furthermore, as the transmission assembly 110 described herein does not require the four screws 32 (FIG. 1C) which typically attach the front housing 20 to the rear housing 30 with engaging formations, or the two screws 41 (FIG. 1A) which attach the speed change lever 36 to the housing 30, the outer diameter of the front housing 120 can be reduced by approximately 3.5mm. This means that the overall assembly 110 has a reduced and more compact size. Additionally, as the screws are not required, this simplifies the number of parts required and increases the speed of assembly.

Furthermore, with the combination of the motor cover 150 and rear housing portion 130b as described, the length of the motor cover 150 can be reduced, approximately 4mm. Again, this provides a more compact design for the transmission 110 and motor cover 150, which enables a more compact design of the tool overall.

Another advantage provided of the arrangement of the transmission assembly 110 described herein is that the sealing cover 39 (FIG. 1A) formed by two components of the prior art do not need to be provided separately and assembled. Instead, the sealing tabs 152 projecting from the rear housing portion 130b of the motor cover 150 can secure the speed selection lever 136. Advantageously, the sealing tabs 152 may be integrally molded to the motor cover 150 and rear housing portion 130b, rather than subsequently fitted as a separate component or plate which has to be located and inserted and secured as with the prior art arrangements.
The preferred aspects of the present disclosure may be summarized as follows:
1. A transmission housing assembly for a power tool, the transmission housing assembly comprising:
   a front housing defining a first volume for receiving a first plurality of gears therein;
   a first rear housing portion; and
   a motor cover having an integral second rear housing portion engageable with the front housing and the first rear housing portion to enclose a second volume for receiving a second plurality of gears therein.
2. The transmission housing assembly of any one of the preceding aspects, in particular aspect 1, wherein the first rear housing portion has at least two spaced apart bosses thereon upon which a speed selection lever is retained, and wherein the at least two spaced apart bosses are disposed proximate to the engagement between the first rear housing portion and the second rear housing portion of the motor cover, so that ends of the speed selection lever are captured therebetween upon engagement of the motor cover and the first rear housing portion.
3. The transmission housing assembly of any one of the preceding aspects, in particular aspect 1, wherein the front housing portion engages with the first rear housing portion and the second rear housing portion of the motor cover via a plurality of complementary formations disposed at or near an end of the second rear housing portion of the motor cover and at or near an end of the first rear housing portion.
4. The transmission housing assembly of any one of the preceding aspects, in particular aspect 3, wherein the plurality of complementary formations of the front housing are outwardly projecting tabs extending from the front housing which are received in a plurality of complementary formations of the first and second rear housing portions.
5. The transmission housing assembly of any one of the preceding aspects, in particular aspect 4, wherein the front housing portion has surfaces and the rear housing portion has a plurality of complementary surfaces which are urged against each other upon engagement of the projecting tabs of the front housing with the plurality of complementary formations of the rear housing portion.
6. The transmission housing assembly for a power tool of any one of the preceding aspects, in particular aspect 1, wherein the first rear housing portion has grooves defined therein to receive and engage a portion of a locking ring when inserted therein after engagement of the first rear housing portion with the front housing.
7. The transmission housing assembly of any one of the preceding aspects, in particular aspect 2, wherein an integrally formed seal tab projects from the second rear housing portion of the motor cover over the speed selection lever and first rear housing portion for sealing thereof.
8. The transmission housing assembly of any one of the preceding aspects, in particular aspect 1, wherein the second rear housing portion further includes a peripheral rim having a plurality of mating face ends, and the first rear housing portion further includes a plurality of corresponding end faces on a top peripheral ridge thereof, and the plurality of mating face ends and the plurality of corresponding end faces are configured to nest together.
9. The transmission housing assembly of any one of the preceding aspects, in particular aspect 1, wherein the first plurality of gears is a first set of planetary gears, and the second plurality of gears is a second set of planetary gears.
10. A method of assembling a transmission assembly, the method comprising:
   inserting a plurality of third layer gears in a front housing;
   engaging a first rear housing portion with the front housing;
   inserting a plurality of second layer gears into the first rear housing portion of the engaged first rear housing portion and front housing;
   locating each end of a speed selection lever in a groove defined in a second layer ring gear and on bosses extending from the first rear housing portion;
   inserting a plurality of first layer gears into the engaged first rear housing portion
      and front housing; and
   engaging a motor cover having an integral second rear housing portion with the first rear housing portion and the front housing.
11. The method of any one of the preceding aspects, in particular aspect 10, wherein the first rear housing portion is engaged with the front housing by engaging a plurality of formations projecting from the first rear housing portion with a plurality of corresponding recesses defined in the front housing.
12. The method of any one of the preceding aspects, in particular aspect 10, wherein locating each end of the speed selection lever in the groove defined in the second layer ring gear is visually confirmed before proceeding.
13. The method of any one of the preceding aspects, in particular aspect 10, further comprising urging the first rear housing portion and the second rear housing portion of the motor cover together with a plurality of end faces positioned on the rear housing portion configured to nest with a plurality of corresponding end faces on the second rear housing portion of the motor cover.
14. The method of any one of the preceding aspects, in particular aspect 10, wherein the plurality of third layer gears are inserted into a volume defined in the front housing when the front housing is supported in a generally vertical orientation, and at least some of the plurality of second layer gears are inserted when the engaged first rear housing portion and front housing are disposed in other than a generally vertical orientation.
15. The method of any one of the preceding aspects, in particular aspect 10, wherein the second rear housing portion of the motor cover is engaged with the first rear housing portion such that an integrally formed seal tab projecting from the second rear housing portion of the motor cover extends over the speed selection lever and the first rear housing portion for sealing thereof.
16. A power tool comprising:
   an electric motor; and
   a transmission assembly coupled to the electric motor to receive torque therefrom, the transmission assembly including
      a front housing defining a first volume for receiving a first plurality of gears therein;
      a first rear housing portion;
      a speed selection lever pivotably coupled to the first rear housing portion; and
      a motor cover for housing the electric motor, the motor cover having an integral second rear housing portion opposite the motor that is engageable with the front housing and the first rear housing portion to enclose a second volume for receiving a second plurality of gears therein, the motor cover also having a plurality of seal tabs extending over the speed selection lever to seal the speed selection lever between the first rear housing portion and the second rear housing portion.
17. The power tool of any one of the preceding aspects, in particular aspect 16, wherein the sealing tabs are integrally molded to the second rear housing portion of the motor cover.
18. The power tool of any one of the preceding aspects, in particular aspect 16, wherein the first rear housing portion further comprises a plurality of bosses for supporting the speed selection lever.
19. The power tool of any one of the preceding aspects, in particular aspect 16, wherein the front housing is engaged with the first rear housing portion and the second rear housing portion of the motor cover via a plurality of complementary formations disposed at or near an end of the second rear housing portion of the motor cover and at or near an end of the first rear housing portion.
20. The power tool of any one of the preceding aspects, in particular aspect 16, wherein the first plurality of gears is a first set of planetary gears, and the second plurality of gears is a second set of planetary gears.
Various features of the invention are set forth in the following claims.

## Claims

1. A transmission housing assembly for a power tool, the transmission housing
assembly comprising:
a front housing defining a first volume for receiving a first plurality of gears therein;
a first rear housing portion; and
a motor cover having an integral second rear housing portion engageable with the front housing and the first rear housing portion to enclose a second volume for receiving a second plurality of gears therein.

2. The transmission housing assembly of claim 1, wherein the first rear housing portion has at least two spaced apart bosses thereon upon which a speed selection lever is retained, and wherein the at least two spaced apart bosses are disposed proximate to the engagement between the first rear housing portion and the second rear housing portion of the motor cover, so that ends of the speed selection lever are captured therebetween upon engagement of the motor cover and the first rear housing portion.

3. The transmission housing assembly of either claim 1 or claim 2, wherein the front housing portion engages with the first rear housing portion and the second rear housing portion of the motor cover via a plurality of complementary formations disposed at or near an end of the second rear housing portion of the motor cover and at or near an end of the first rear housing portion,
wherein preferably, the plurality of complementary formations of the front housing are outwardly projecting tabs extending from the front housing which are received in a plurality of complementary formations of the first and second rear housing portions,
and wherein further preferably the front housing portion has surfaces and the rear housing portion has a plurality of complementary surfaces which are urged against each other upon engagement of the projecting tabs of the front housing with the plurality of complementary formations of the rear housing portion.

4. The transmission housing assembly for a power tool of any one of claims 1 to 3, wherein the first rear housing portion has grooves defined therein to receive and engage a portion of a locking ring when inserted therein after engagement of the first rear housing portion with the front housing.

5. The transmission housing assembly of any one of claims 1 to 4, wherein an integrally formed seal tab projects from the second rear housing portion of the motor cover over the speed selection lever and first rear housing portion for sealing thereof.

6. The transmission housing assembly of any one of claims 1 to 5, wherein the second rear housing portion further includes a peripheral rim having a plurality of mating face ends, and the first rear housing portion further includes a plurality of corresponding end faces on a top peripheral ridge thereof, and the plurality of mating face ends and the plurality of corresponding end faces are configured to nest together.

7. A method of assembling a transmission assembly, the method comprising:
inserting a plurality of third layer gears in a front housing;
engaging a first rear housing portion with the front housing;
inserting a plurality of second layer gears into the first rear housing portion of the engaged first rear housing portion and front housing;
locating each end of a speed selection lever in a groove defined in a second layer ring gear and on bosses extending from the first rear housing portion;
inserting a plurality of first layer gears into the engaged first rear housing portion
and front housing; and
engaging a motor cover having an integral second rear housing portion with the first rear housing portion and the front housing.

8. The method of claim 7, wherein the first rear housing portion is engaged with the front housing by engaging a plurality of formations projecting from the first rear housing portion with a plurality of corresponding recesses defined in the front housing, and/or
wherein locating each end of the speed selection lever in the groove defined in the second layer ring gear is visually confirmed before proceeding.

9. The method of either claim 7 or claim 8, further comprising urging the first rear housing portion and the second rear housing portion of the motor cover together with a plurality of end faces positioned on the rear housing portion configured to nest with a plurality of corresponding end faces on the second rear housing portion of the motor cover.

10. The method of any one of claims 7 to 9, wherein the plurality of third layer gears are inserted into a volume defined in the front housing when the front housing is supported in a generally vertical orientation, and at least some of the plurality of second layer gears are inserted when the engaged first rear housing portion and front housing are disposed in other than a generally vertical orientation.

11. The method of any one of claims 7 to 10, wherein the second rear housing portion of the motor cover is engaged with the first rear housing portion such that an integrally formed seal tab projecting from the second rear housing portion of the motor cover extends over the speed selection lever and the first rear housing portion for sealing thereof.

12. A power tool comprising:
an electric motor; and
a transmission assembly coupled to the electric motor to receive torque therefrom, the transmission assembly including
a front housing defining a first volume for receiving a first plurality of gears therein;
a first rear housing portion;
a speed selection lever pivotably coupled to the first rear housing portion; and
a motor cover for housing the electric motor, the motor cover having an integral second rear housing portion opposite the motor that is engageable with the front housing and the first rear housing portion to enclose a second volume for receiving a second plurality of gears therein, the motor cover also having a plurality of seal tabs extending over the speed selection lever to seal the speed selection lever between the first rear housing portion and the second rear housing portion.

13. The power tool of claim 12, wherein the sealing tabs are integrally molded to the second rear housing portion of the motor cover,
and/or wherein the first rear housing portion further comprises a plurality of bosses for supporting the speed selection lever.

14. The power tool of either claim 12 or claim 13, wherein the front housing is engaged with the first rear housing portion and the second rear housing portion of the motor cover via a plurality of complementary formations disposed at or near an end of the second rear housing portion of the motor cover and at or near an end of the first rear housing portion.

15. The power tool of any one of claims 1 to 6 and claims 13 to 14, wherein the first plurality of gears is a first set of planetary gears, and the second plurality of gears is a second set of planetary gears.
